# EUROPÄISCHE PATENTSCHRIFT

(11) **EP 4 085 183 B1**
(45) Veröffentlichungstag und Bekanntmachung des Hinweises auf die Patenterteilung: **01.05.2024**
(21) Anmeldenummer: 20714120.1
(22) Anmeldetag: 06.03.2020
(51) Int. Cl.: C25B 15/08, C25B 9/73, C25B 1/04, F01K 13/00, F01K 23/06, F01K 23/10

(54) **SYSTEM MIT EINEM VERBRENNUNGSKRAFTWERK UND EINER ELEKTROLYSEEINHEIT SOWIE VERFAHREN ZUM BETREIBEN EINES SOLCHEN SYSTEMS**
SYSTEM HAVING A COMBUSTION POWER PLANT AND AN ELECTROLYSIS UNIT, AND METHOD FOR OPERATING A SYSTEM OF THIS TYPE
SYSTÈME DOTÉ D'UNE CENTRALE À COMBUSTION ET D'UNE UNITÉ D'ÉLECTROLYSE, ET PROCÉDÉ DE FONCTIONNEMENT D'UN TEL SYSTÈME

(43) Veröffentlichungstag der Anmeldung: 09.11.2022
(73) Patentinhaber: Siemens Energy Global GmbH & Co. KG, 81739 München (DE)
(72) Erfinder: BROY, Alexander, 90768 Fürth (DE); GIERING, Gerald Franz, 90562 Kalchreuth (DE); RENTSCHLER, Alexander, 64625 Bensheim (DE)
(86) Internationale Anmeldenummer: PCT/EP2020/056042
(87) Internationale Veröffentlichungsnummer: WO 2021/175441

(56) Entgegenhaltungen:
- EP-A1- 2 360 230
- WO-A1-2011/120706
- DE-A1-102009 048 455
- DE-A1-102012 013 076
- DE-A1-102015 209 875
- DE-A1-102015 226 111
- US-A1- 2008 137 797
- US-A1- 2013 042 626
- US-A1- 2014 203 557

## Beschreibung

Die Erfindung betrifft ein System mit einem Verbrennungskraftwerk und einer Elektrolyseeinheit sowie ein Verfahren zum Betreiben eines solchen Systems.

Die Offenlegungsschriften DE 10 2015 226 111 A1, EP 2 360 230 A1 und DE 10 2015 209875 A1 offenbaren Elektrolyseeinheiten, die von einer regenerativen Stromquelle versorgt werden.

Das Dokument US 2014/203557 A1 offenbart ein Verbrennungskraftwerk mit einer Gasturbine und einer Elektrolyseeinheit, wobei der von der Elektrolyseeinheit produzierte Wasserstoff eingesetzt wird, um den Bedarf an zusätzlichem Brennstoff zu senken.

Aus der Schrift US 2008/137797 A1 ist ein Verfahren zum Erzeugen von elektrischer Energie mittels einer Gasturbine und eines Generators bekannt.

Aus der Schrift US 2013/042626 A1 ist ein System mit einer Elektrolyseeinheit, einer Dampfturbine und einer Gasturbine bekannt.

Die Schrift DE 10 2012 013076 A1 offenbart ein Verfahren, mit dem effizient regenerativ erzeugter überschüssiger Strom in chemische Energie gewandelt, gespeichert und bei Bedarf wieder rückverstromt werden kann. Dabei werden eine Elektrolyseeinheit und eine Dampfturbine verwendet.

Aus der Offenlegungsschrift DE 10 2009 048455 A1 ist bekannt, in einer Elektrolyseeinheit anfallende Abwärme über ein Wärmerohr zu einem Reaktor für hydrothermale Katalyse (HTK) zu leiten.

Die internationale Patentanmeldung WO 2011/120706 A1 offenbart, dass in einer Elektrolyseeinheit anfallende Abwärme über ein Wärmerohr einem Dampferzeuger zugeführt wird.

Elektrolyseeinheiten zerlegen mit Hilfe einer für Sauerstoffionen durchlässigen Membran, an der eine hinreichend hohe Spannung angelegt wird, Wasserdampf zu Sauerstoff und Wasserstoff. Die Elektrolysezellen der Elektrolyseeinheit, in denen der Vorgang stattfindet, benötigen üblicherweise eine hohe Temperatur von über 750 °C. Die Temperatur ist unter anderem von dem verwendeten Material der Elektrolysezellen abhängig. Der Wasserdampf kann durch mehrfaches, elektrisches Aufheizen und durch Wärmetauscher, die dem abgegebenen Sauerstoff und Wasserstoff der Elektrolysezelle Wärme entziehen, erhitzt werden. Dies sorgt dafür, dass die abgegebenen Gase entsprechend zur weiteren Nutzung abgekühlt sind und der energetische Aufwand zur Wasserdampferzeugung reduziert wird. Die abgegebenen Gase haben dann eine relativ hohe Restfeuchte. Technische Einrichtungen können genutzt werden, um den verbliebenen Wasseranteil heraus zu kondensieren. Das Wasser kann dann den Elektrolysezellen wieder zugeführt werden.

Eine Anwendung von Elektrolyseeinheiten ist das Erzeugen von Wasserstoff mit Hilfe von Strom aus erneuerbaren Energien oder, mit anderen Worten, aus regenerativer Erzeugung. Dadurch lassen sich die fluktuierenden erneuerbaren Energien in Form von Wasserstoff speichern. Jedoch bedingt die Versorgung von Elektrolyseeinheiten mit Strom aus erneuerbaren Energien aufgrund ihres fluktuierenden Charakters und infolge der sich daraus ergebenden Temperaturschwankungen eine Verkürzung der Lebensdauer der Elektrolyseeinheit.

Aufgabe der Erfindung ist es daher, eine Elektrolyseeinheit auf vorteilhafte Art und Weise zu betreiben, insbesondere mit einem hohen Wirkungsgrad und derart, dass eine hohe Lebensdauer der Elektrolyseeinheit erreicht wird.

Die voranstehende Aufgabe wird durch die Gegenstände der Patentansprüche, insbesondere durch ein System nach Anspruch 1 und ein Verfahren nach Anspruch 12, gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen System offenbart sind, selbstverständlich auch im Zusammenhang mit dem erfindungsgemäßen Verfahren, sodass bezüglich der Offenbarung zu den einzelnen Erfindungsaspekten stets wechselseitig Bezug genommen wird beziehungsweise werden kann.

Die gestellte Aufgabe wird gemäß einem ersten Aspekt gelöst durch ein System mit einem Verbrennungskraftwerk zum Erzeugen von elektrischem Strom und einer Elektrolyseeinheit zum Erzeugen von Wasserstoff, wobei das Verbrennungskraftwerk eine Brennkammer zum Verbrennen eines Brennstoffes und eine Abgasleitung zum Ableiten der beim Verbrennen des Brennstoffes entstehenden warmen Abgase aufweist, und wobei die Abgasleitung thermisch mit der Elektrolyseeinheit gekoppelt ist, wobei das System eine Steuervorrichtung aufweist, die dazu eingerichtet ist, die Wärmeübertragungsrate von der Abgasleitung zu der Elektrolyseeinheit zu steuern.

Durch die thermische Kopplung der Abgasleitung mit der Elektrolyseeinheit wird die Wärme bzw. thermische Energie der warmen Abgase des Verbrennungskraftwerks als Wärme bzw. thermische Energie an der Elektrolyseeinheit bereitgestellt. Dadurch wird die Abwärme des Abgases des Verbrennungskraftwerks auf vorteilhafte Art und Weise genutzt und ein hoher Wirkungsgrad beim Erzeugen von Wasserstoff mittels der Elektrolyseeinheit erzielt. Ferner kann durch das Bereitstellen der Wärme aus dem Abgas des Verbrennungskraftwerks eine hohe Lebensdauer der Elektrolyseeinheit erzielt werden, da die Elektrolyseeinheit durch entsprechendes Zuführen der Wärme aus dem Abgas bei einer konstanten Temperatur gehalten werden kann.

Die Elektrolyseeinheit kann auch als Elektrolyseur bezeichnet werden. Die Elektrolyseeinheit kann insbesondere ein Wasserelektrolyseur sein. Ferner kann die Elektrolyseeinheit insbesondere ein Protonen-Austausch-Membran-Elektrolyseur sein. Die Elektrolyseeinheit kann mehrere miteinander verschaltete Elektrolysezellen aufweisen. Die mehreren miteinander verschalteten Elektrolysezellen können in Stacks zusammengefasst sein. Die Elektrolyseeinheit kann mehrere solcher Stacks umfassen. Die Elektrolyseeinheit kann auch als reversible Brennstoffzelle ausgebildet sein. Die Elektrolyseeinheit kann insbesondere Festoxid-Elektrolyseurzellen aufweisen.

Die Elektrolyseeinheit kann insbesondere als eine Hochtemperaturelektrolyseeinheit bzw. ein Hochtemperaturelektrolyseur ausgebildet sein. Dabei wird ein Teil der für die Elektrolyse notwendigen Reaktionsenthalpie als Wärme eingekoppelt. Dies führt dazu, dass der Strombedarf für die Elektrolyse sinkt und damit ein hoher Wirkungsgrad erzielt wird.

Die hierin gewählte zahlentechnische Bezeichnung der Einheiten, wie beispielsweise Fluidleitung, Ventil oder Last, als erste, zweite, dritte, vierte usw. ist lediglich beispielhaft zur Unterscheidung der einzelnen Einheiten im Rahmen dieser Patentanmeldung gewählt. Die Erwähnung einer Einheit mit ihrer zahlentechnischen Bezeichnung impliziert nicht, dass es einer entsprechenden Anzahl dieser Einheiten bzw. der in ihrer Zahlenfolge vorhergehenden Einheiten für die Erfindung bedarf. Insoweit sind lediglich die Patentansprüche maßgeblich. Wenn beispielsweise von einer dritten Fluidleitung in einem der Patentansprüche gesprochen wird, ist es nicht notwendig, dass auch eine erste und eine zweite Fluidleitung vorhanden sind, es sei denn, dass dieser Patentanspruch oder ein auf ihn rückbezogener Patentanspruch dies fordert.

Es kann vorgesehen sein, dass die Abgasleitung mittels eines Wärmerohres thermisch mit der Elektrolyseeinheit gekoppelt ist. Die hohe Wärmestromdichte des Wärmerohres erlaubt es, große Wärmemengen auf einer kleinen Querschnittsfläche zu transportieren und Transportverluste gering zu halten.

Dabei kann ferner vorgesehen sein, dass das Wärmerohr als eine Heatpipe ausgebildet ist. Heatpipes nutzen das sog. Dochtprinzip, um das kondensierte Fluid zurück zum Verdampfer zu führen. Dies ermöglicht Wärmeübertragungen mit hohen Wärmestromdichten in beliebiger Orientierung der Heatpipe und damit eine hohe Flexibilität bei der räumlichen Anordnung der Komponenten des Systems.

Auch kann vorgesehen sein, dass die Elektrolyseeinheit elektrisch mit einer regenerativen Stromerzeugungsquelle gekoppelt ist. Die regenerative Stromerzeugungsquelle ermöglicht es, die erneuerbaren Energien mit ihrem fluktuierenden Charakter zur Nutzung zu einem späteren Zeitpunkt in Form von Wasserstoff zu speichern.

Weiterhin ist vorgesehen, dass das System eine Steuervorrichtung aufweist, die dazu eingerichtet ist, die Wärmeübertragungsrate von der Abgasleitung zu der Elektrolyseeinheit zu steuern. Insbesondere kann die Steuervorrichtung dazu eingerichtet sein, die Wärmeübertragungsrate auf null oder auf einen maximalen Wert einzustellen. Die Steuervorrichtung kann ferner dazu eingerichtet sein, die Wärmeübertragungsrate auf Zwischenwerte zwischen null und dem maximalen Wert einzustellen. Die Steuervorrichtung kann beispielsweise ein Ventil aufweisen oder als ein Ventil ausgebildet sein. Die Steuervorrichtung kann auch als eine Verstellvorrichtung für das Wärmerohr ausgebildet sein. Das Wärmerohr kann dann als verstellbares Wärmerohr bezeichnet werden. Das verstellbare Wärmerohr kann entsprechend dazu eingerichtet sein, die Abgasleitung durch Verstellen wahlweise thermisch mit der Elektrolyseeinheit vollständig zu koppeln, teilweise zu koppeln und/oder vollständig zu entkoppeln. Im vollständig gekoppelten Zustand wird die maximale Wärmeübertragungsrate von der Abgasleitung mittels des Wärmerohres zu der Elektrolyseeinheit erzielt. Bei einem teilweise gekoppelten Wärmerohr wird ein Teil der maximalen Wärmeübertragungsrate erzielt und bei entkoppeltem Wärmerohr wird keine Wärme übertragen, die Wärmeübertragungsrate beträgt demnach null. Demnach kann durch entsprechendes Steuern mittels der Steuervorrichtung auf einfache Art und Weise die Zufuhr der thermischen Energie aus dem Abgas des Verbrennungskraftwerkes zu der Elektrolyseeinheit gesteuert werden.

Dabei kann vorgesehen sein, dass das System eine Regelvorrichtung aufweist, die dazu eingerichtet ist, eine Schwankung der Betriebstemperatur der Elektrolyseeinheit, die sich aus einer Fluktuation eines der Elektrolyseeinheit zugeführten Stromes ergibt, mittels Regelns der Steuervorrichtung auszugleichen. Demnach kann die Regelvorrichtung, wenn infolge einer Fluktuation, wie sie insbesondere bei Versorgung mit Strom aus einer regenerativen Stromerzeugungsquelle vorkommen kann, weniger Strom der Elektrolyseeinheit zugeführt wird, durch Erhöhen der Wärmeübertragungsrate eine Senkung der Betriebstemperatur der Elektrolyseeinheit auf effiziente Weise verhindern. Wenn infolge einer Fluktuation mehr Strom der Elektrolyseeinheit zugeführt wird, kann die Regelvorrichtung wiederum durch Senken der Wärmeübertragungsrate einen Anstieg der Betriebstemperatur der Elektrolyseeinheit verhindern. Bei einem verstellbaren Wärmerohr kann die Regelvorrichtung das Wärmerohr entsprechend durch Verstellen der Verstellvorrichtung regeln, um die Wärmeübertragungsrate entsprechend zu regeln. Das Verhindern der Schwankung der Betriebstemperatur verlängert die Lebensdauer der Elektrolyseeinheit.

Ferner kann dabei vorgesehen sein, dass die Regelvorrichtung dazu eingerichtet ist, die Steuervorrichtung derart zu regeln, dass eine konstante oder im Wesentlichen konstante Wasserstoffmenge von der Elektrolyseeinheit erzeugt wird. Die Regelvorrichtung regelt entsprechend das Steuern der Wärmeübertragungsrate mittels der Steuervorrichtung. Dies verlängert die Lebensdauer und ermöglicht eine besonders effiziente Nutzung der Elektrolyseeinheit.

Außerdem kann vorgesehen sein, dass die Abgasleitung thermisch mit einem Dampferzeuger gekoppelt ist, der dazu eingerichtet ist, Wasserdampf aus der Abwärme des Abgases zu erzeugen, und der Dampferzeuger mittels einer ersten Fluidleitung mit der Elektrolyseeinheit gekoppelt ist, wobei die erste Fluidleitung dazu eingerichtet ist, den aus der Abwärme in dem Dampferzeuger erzeugten Wasserdampf der Elektrolyseeinheit zuzuführen. Der Dampferzeuger kann somit zum Erzeugen von heißem Wasserdampf mittels der Abwärme des Abgasstromes genutzt werden. Dieser heiße Wasserdampf kann vorteilhafterweise der Elektrolyseeinheit bereitgestellt werden, um den Wirkungsgrad der Elektrolyseeinheit bzw. des gesamten Systems zu erhöhen. Es kann dabei vorgesehen sein, dass entweder das Wärmerohr oder der Dampferzeuger oder beide mit der thermischen Energie aus dem Abgas des Verbrennungskraftwerks versorgt werden. Entsprechend der Steuerung der Steuervorrichtung kann ein Teil der Wärme der Abgase der Elektrolyseeinheit, insbesondere mittels des Wärmerohres, und ein Teil der Wärme der Abgase dem Dampferzeuger zugeführt werden.

Dabei kann vorgesehen sein, dass die erste Fluidleitung mittels eines Wärmetauschers mit einer vierten Fluidleitung gekoppelt ist, wobei die vierte Fluidleitung mit der Elektrolyseeinheit gekoppelt ist und dazu eingerichtet ist, den in der Elektrolyseeinheit erzeugten Wasserstoff abzuführen. Mit anderen Worten ist die erste Fluidleitung mittels des Wärmetauschers wärmetechnisch bzw. zum Wärmeaustausch mit der vierten Fluidleitung gekoppelt. Dadurch kann der nach seiner Erzeugung noch warme Wasserstoff seine Wärme mittels des Wärmetauschers an den Wasserdampf in der ersten Fluidleitung abgeben, um den Wirkungsgrad des Elektrolyseprozesses zu erhöhen.

Auch kann dabei vorgesehen sein, dass der Dampferzeuger mittels einer zweiten Fluidleitung mit einer Dampfturbine des Verbrennungskraftwerks gekoppelt ist, die dazu eingerichtet ist, den in dem Dampferzeuger aus der Abwärme des Abgases erzeugten Wasserdampf zu entspannen, wobei die Dampfturbine mit einer ersten Last gekoppelt ist und wobei die Dampfturbine mittels einer dritten Fluidleitung zur Rückführung des in der Dampfturbine entspannten Wasserdampfes mit dem Dampferzeuger gekoppelt ist. Die zweite Fluidleitung und die dritte Fluidleitung sind damit jeweils insbesondere fluidtechnisch gekoppelt. Dadurch kann die thermische Energie aus dem Abgas alternativ zur Versorgung der Elektrolyseeinheit mit Wasserdampf zum Antreiben der Dampfturbine genutzt werden. Die Last kann ein elektrischer Generator zu sein. Dadurch kann die Wärme der Abgase genutzt werden, um Strom zu erzeugen.

Es kann auch vorgesehen sein, dass eine fünfte Fluidleitung mit der Elektrolyseeinheit und dem Verbrennungskraftwerk gekoppelt ist, wobei die fünfte Fluidleitung dazu eingerichtet ist, den in der Elektrolyseeinheit erzeugten Sauerstoff dem Verbrennungskraftwerk für die Verbrennung des Brennstoffes zuzuführen. Die fünfte Fluidleitung ist damit insbesondere fluidtechnisch gekoppelt. Dadurch kann der von der Elektrolyseeinheit erzeugte Sauerstoff für die Verbrennung im Verbrennungskraftwerk genutzt und somit der Wirkungsgrad des Systems weiter erhöht werden.

Ferner kann vorgesehen sein, dass das Verbrennungskraftwerk als eine Gasturbine oder ein Müllkraftwerk ausgebildet ist. Als Gasturbine kann ein Gas-und-Dampf-Kombikraftwerk verwendet werden. Die Gasturbine kann beispielsweise in einem Humid Air Turbine Prozess oder einem Cheng-Prozess betrieben werden. Bei diesen Verbrennungskraftwerken fällt viel Abwärme in den Abgasen an, die in dem System nutzbar gemacht wird.

Die eingangs gestellte Aufgabe wird gemäß einem zweiten Aspekt gelöst durch ein Verfahren zum Betreiben eines Systems nach dem ersten Aspekt der Erfindung, wobei das Verfahren die Schritte aufweist:
(a) Verbrennen des Brennstoffes in dem Verbrennungskraftwerk,
(b) Entstehen der warmen Abgase beim Verbrennen des Brennstoffes,
(c) Abführen der warmen Abgase mittels der Abgasleitung,
(d) Zuführen der thermischen Energie der warmen Abgase aus der Abgasleitung zur Elektrolyseeinheit und
(e) Erzeugen von Wasserstoff in der Elektrolyseeinheit unter Nutzung der thermischen Energie aus den warmen Abgasen.

Es ist vorgesehen, dass das Verfahren ferner die Schritte aufweist: Zuführen von Strom zu der Elektrolyseeinheit und Ausgleichen einer Schwankung der Betriebstemperatur der Elektrolyseeinheit, die sich aus einer Fluktuation des der Elektrolyseeinheit zugeführten Stromes ergibt, mittels Regelns der Steuervorrichtung.

Ferner kann vorgesehen sein, dass das Regeln der Steuervorrichtung derart erfolgt, dass eine konstante oder im Wesentlichen konstante Wasserstoffmenge produziert wird.

Weitere, die Erfindung verbessernde Maßnahmen ergeben sich aus der nachfolgenden Beschreibung zu einem Ausführungsbeispiel der Erfindung, das in der Figur schematisch dargestellt ist. Sämtliche aus den Ansprüchen, der Beschreibung oder der Figur hervorgehende Merkmale und/oder Vorteile, einschließlich konstruktiver Einzelheiten und räumlicher Anordnungen, können sowohl für sich als auch in den verschiedenen Kombinationen erfindungswesentlich sein. Anhand der beigefügten Zeichnung wird die Erfindung nachfolgend näher erläutert.

Die Figur zeigt eine schematische Ansicht eines Systems 100 gemäß einem Ausführungsbeispiel der Erfindung.

Das System 100 weist ein Verbrennungskraftwerk 10 und eine Elektrolyseeinheit 30 auf. Vorliegend ist das Verbrennungskraftwerk 10 als ein Gas- und Dampf-Kombikraftwerk ausgebildet. Das Verbrennungskraftwerk 10 weist demensprechend einen Verdichter 12 auf, der mit einer Turbine 13 gekoppelt ist. Eine Brennkammer 11 ist der Turbine 13 vorgeschaltet. Ferner weist das Verbrennungskraftwerk 10 eine Dampfturbine 16 auf.

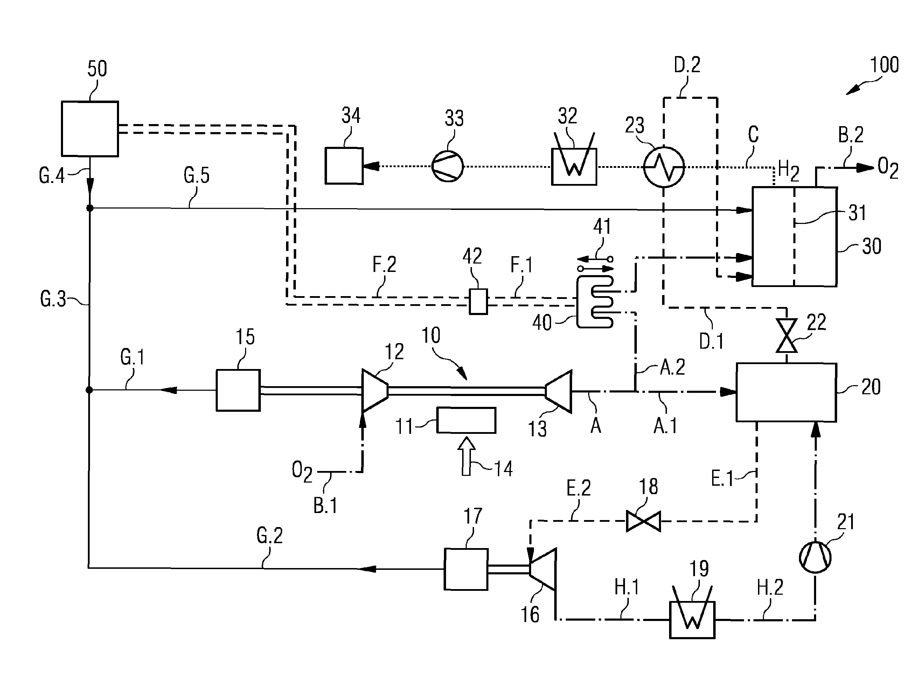

Die Elektrolyseeinheit 30 ist als Hochtemperaturelektrolyseur ausgebildet. Die Elektrolyseeinheit 30 weist mehrere Elektrolysezellen und zumindest eine Membran 31 auf, die in Fig. 1 angedeutet ist. Die Membran 31 ist für Sauerstoffionen durchlässig. Durch Anlegen einer hinreichend hohen Spannung mittels der Stromleitung G, vorliegend Stromzweig G.5, an der zumindest einen Membran 31 wird ein mittels einer ersten Fluidleitung D, die auch als Wasser- oder Wasserdampfleitung D bezeichnet werden kann, zugeführter Wasserdampf H2O zu Sauerstoff O2 und Wasserstoff H2 zerlegt.

Der erzeugte Sauerstoff O2 wird in einer fünften Fluidleitung B, die auch als Sauerstoffleitung bezeichnet werden kann und die vorliegend als B.2 gekennzeichnet ist, abgeführt. Dieser erzeugte Sauerstoff O2 kann vorteilhafterweise mittels der fünften Fluidleitung B, vorliegend als B.1 gekennzeichnet, dem Verdichter 12 zugeführt werden, um den Wirkungsgrad des Systems 100 zu erhöhen.

Der Wasserstoff H2 wird in einer vierten Fluidleitung C, die auch als Wasserstoffleitung bezeichnet werden kann, mittels eines Wärmetauschers 23, eines zweiten Kondensators 32 und einer zweiten Pumpe 33 abgeführt. Die vierte Fluidleitung C führt vorliegend zu einem Speicher 34 für Wasserstoff H2. Mittels des Wärmetauschers 23 wird Wärme zwischen dem erzeugten warmen Wasserstoff H2 aus der Elektrolyseeinheit 30 und dem Wasserdampf H2O in der ersten Fluidleitung D ausgetauscht. Dazu führt die erste Fluidleitung D von einem Dampferzeuger 20 zum Wärmetauscher 23, vorliegend mit einem ersten Abschnitt D.1 der ersten Fluidleitung D, von dem Wärmetauscher 23 zur Elektrolyseeinheit 30, vorliegend mit einem zweiten Abschnitt D.2 der ersten Fluidleitung D.

Der der Elektrolyseeinheit 30 zugeführte Strom kann aus verschiedenen Quellen stammen. Insbesondere kann vorgesehen sein, dass die Elektrolyseeinheit 30 Strom von einer regenerativen Stromerzeugungsquelle 50 bezieht. Vorliegend ist dies durch die Verbindung der Stromleitung G mittels der Stromleitungszweige G.4, G.5 von regenerativer Stromerzeugungsquelle 50 und Elektrolyseeinheit 30 gezeigt. Auch kann das Verbrennungskraftwerk 10 die zweite Last 15 aufweisen, die als elektrischer Generator ausgebildet sein kann. So kann der von der zweiten Last 15 des Verbrennungskraftwerks 10 erzeugte Strom mittels der Stromleitungszweige G.1, G.3, G.5 der Elektrolyseeinheit 30 zugeführt werden. Auch kann die Dampfturbine 16 mit einer ersten Last 17 gekoppelt sein, die als elektrischer Generator ausgebildet ist. Auch diese kann dadurch Strom mittels der Stromleitungszweige G.2, G.3, G.5 der Elektrolyseeinheit 30 zuführen.

Der Dampferzeuger 20 ist mit einer mit der Turbine 13 des Verbrennungskraftwerks 10 gekoppelten Abgasleitung A, vorliegend mittels eines ersten Abgasleitungszweiges A.1, thermisch gekoppelt. In der Abgasleitung A werden die warmen Abgase des Verbrennungskraftwerks 10 transportiert. Die Wärme dieser warmen Abgase wird in dem Dampferzeuger 20 genutzt. Der Dampferzeuger 20 ist dazu eingerichtet, Wasser zu Wasserdampf zu erhitzen und/oder Wasserdampf zu erhitzen. Dazu kann er Strom und/oder die thermische Energie der Abgase nutzen.

Der Dampferzeuger 20 ist mittels einer zweiten Fluidleitung E mit der Dampfturbine 16 gekoppelt. Die zweite Fluidleitung E weist einen zweiten Fluidleitungsabschnitt E.1 von dem Dampferzeuger 20 zu einem ersten Ventil 18 und einen zweiten Fluidleitungsabschnitt E.2 von dem ersten Ventil 18 zu der Dampfturbine 16 auf. Das erste Ventil 18 kann entsprechend geöffnet werden, um den erhitzten Wasserdampf zu der Dampfturbine 16 zu leiten. Dadurch kann die thermische Energie der Abgase aus dem Verbrennungskraftwerk 10 zur Erzeugung von Strom mittels der als elektrischer Generator ausgebildeten ersten Last 17 genutzt werden. Mittels einer dritten Fluidleitung H mit den dritten Fluidleitungsabschnitten H.1, H.2 und darin angeordnetem ersten Kondensator 19 und erster Pumpe 21 kann das kondensierte Wasser wieder dem Dampferzeuger 20 zugeführt werden, sodass ein geschlossener Kreislauf besteht.

Ferner ist der Dampferzeuger 20 mittels der ersten Fluidleitung D mit der Elektrolyseeinheit 30 gekoppelt. In der ersten Fluidleitung D, um genau zu sein in dem ersten Fluidleitungsabschnitt D.1, ist ein zweites Ventil 22 angeordnet. Bei Öffnen des zweiten Ventils 22 bei geschlossenem ersten Ventil 18 kann der mithilfe der thermischen Energie der Abgase erzeugte und erhitzte Wasserdampf an der Elektrolyseeinheit 30 bereitgestellt werden.

Die Abgasleitung A weist einen zweiten Abgasleitungszweig A.2 auf. Die Abgasleitung A ist mittels des zweiten Abgasleitungszweigs A.2 thermisch mit der Elektrolyseeinheit 30 gekoppelt, um der Elektrolyseeinheit 30 Wärme zuzuführen und so den Strombedarf der Elektrolyseeinheit 30 zur Zerlegung von Wasser zu senken. Vorliegend ist die Abgasleitung A mittels eines Wärmerohres 40 thermisch mit der Elektrolyseeinheit 30 gekoppelt. Das Wärmerohr 40 ist vorliegend als eine Heatpipe ausgebildet. Ferner weist das Wärmerohr 40 vorliegend eine Steuervorrichtung 41 auf. Die Steuervorrichtung 41 ermöglicht es, die Wärmeübertragungsrate der Wärme bzw. thermischen Energie des Abgases in der Abgasleitung A von der Abgasleitung A zu der Elektrolyseeinheit 30 zu steuern. Vorliegend ist die Steuervorrichtung 41 als eine Verstellvorrichtung 41 ausgebildet. Durch Verstellen des Wärmerohres 40 kann die Abgasleitung A mit der Elektrolyseeinheit 30 thermisch gekoppelt und entkoppelt werden. Dadurch ermöglicht es das Verstellen des Wärmerohres 40 festzulegen, ob Wärme von dem Abgas mittels des Wärmerohres 40 der Elektrolyseeinheit 30 zugeführt wird oder nicht.

Die Steuervorrichtung 41 ist regeltechnisch mittels einer Regelleitung F, vorliegend Regelleitungsabschnitt F.1, mit einer Regelvorrichtung 42 verbunden. Die Regelvorrichtung 42 regelt das Steuern der Steuervorrichtung 41. Ferner ist die Regelvorrichtung 42 regeltechnisch mittels der Regelleitung F, vorliegend Regelleitungsabschnitt F.2, mit der regenerativen Stromerzeugungsquelle 50 verbunden. Dies ermöglicht es der Regelvorrichtung 42, auf Fluktuationen in der Stromversorgung der Elektrolyseeinheit 30 durch entsprechendes Regeln der Steuervorrichtung 41 zu reagieren. Dadurch können Schwankungen der Betriebstemperatur der Elektrolyseeinheit 30 vermieden werden, um die Lebensdauer der Elektrolyseeinheit 30 zu erhöhen. Ferner kann durch entsprechendes Regeln der Wärmeübertragungsrate auch eine konstante oder im Wesentlichen konstante Wasserstoffmenge von der Elektrolyseeinheit 30 erzeugt werden, selbst wenn die Stromversorgung fluktuiert.

## Patentansprüche

1. System (100) mit einem Verbrennungskraftwerk (10) zum Erzeugen von Strom und einer Elektrolyseeinheit (30) zum Erzeugen von Wasserstoff,
wobei das Verbrennungskraftwerk (10) eine Brennkammer (11) zum Verbrennen eines Brennstoffes (14) und eine Abgasleitung (A) zum Ableiten der beim Verbrennen des Brennstoffes (14) entstehenden warmen Abgase aufweist, und
wobei die Abgasleitung (A) thermisch mit der Elektrolyseeinheit (30) gekoppelt ist,
**dadurch gekennzeichnet, dass**
das System (100) eine Steuervorrichtung (41) aufweist, die dazu eingerichtet ist, eine Wärmeübertragungsrate von der Abgasleitung (A) zu der Elektrolyseeinheit (30) zu steuern.

2. System (100) nach Anspruch 1,
**dadurch gekennzeichnet, dass**
die Abgasleitung (A) mittels eines Wärmerohres (40) thermisch mit der Elektrolyseeinheit (30) gekoppelt ist.

3. System (100) nach Anspruch 2,
**dadurch gekennzeichnet, dass**
das Wärmerohr (40) als eine Heatpipe ausgebildet ist.

4. System (100) nach einem der voranstehenden Ansprüche, **dadurch gekennzeichnet, dass**
die Elektrolyseeinheit (30) elektrisch mit einer regenerativen Stromerzeugungsquelle (50) gekoppelt ist.

5. System (100) nach einem der voranstehenden Ansprüche, **dadurch gekennzeichnet, dass**
das System (100) eine Regelvorrichtung (42) aufweist, die dazu eingerichtet ist, eine Schwankung der Betriebstemperatur der Elektrolyseeinheit (30), die sich aus einer Fluktuation eines der Elektrolyseeinheit (30) zugeführten Stromes ergibt, mittels Regelns der Steuervorrichtung (41) auszugleichen.

6. System (100) nach Anspruch 5,
**dadurch gekennzeichnet, dass**
die Regelvorrichtung (42) dazu eingerichtet ist, die Steuervorrichtung (41) derart zu regeln, dass eine konstante oder im Wesentlichen konstante Wasserstoffmenge von der Elektrolyseeinheit (30) erzeugt wird.

7. System (100) nach einem der voranstehenden Ansprüche, **dadurch gekennzeichnet, dass**
die Abgasleitung (A) thermisch mit einem Dampferzeuger (20) gekoppelt ist, der dazu eingerichtet ist, Wasserdampf aus der Abwärme des Abgases zu erzeugen, und der Dampferzeuger (20) mittels einer ersten Fluidleitung (D) mit der Elektrolyseeinheit (30) gekoppelt ist,
wobei die erste Fluidleitung (D) dazu eingerichtet ist, den aus der Abwärme in dem Dampferzeuger (20) erzeugten Wasserdampf der Elektrolyseeinheit (30) zuzuführen.

8. System (100) nach Anspruch 7,
**dadurch gekennzeichnet, dass**
die erste Fluidleitung (D) mittels eines Wärmetauschers (23) mit einer vierten Fluidleitung (C) gekoppelt ist, wobei die vierte Fluidleitung (C) mit der Elektrolyseeinheit (30) gekoppelt ist und dazu eingerichtet ist, den in der Elektrolyseeinheit (30) erzeugten Wasserstoff abzuführen.

9. System (100) nach Anspruch 7 oder 8,
**dadurch gekennzeichnet, dass**
der Dampferzeuger (20) mittels einer zweiten Fluidleitung (E) mit einer Dampfturbine (16) des Verbrennungskraftwerks (10) gekoppelt ist, die dazu eingerichtet ist, den in dem Dampferzeuger (20) aus der Abwärme des Abgases erzeugten Wasserdampf zu entspannen,
wobei die Dampfturbine (16) mit einer ersten Last (17) gekoppelt ist, und
wobei die Dampfturbine (16) mittels einer dritten Fluidleitung (H) zur Rückführung des in der Dampfturbine (16) entspannten Wasserdampfes mit dem Dampferzeuger (20) gekoppelt ist.

10. System (100) nach einem der voranstehenden Ansprüche, **dadurch gekennzeichnet, dass**
eine fünfte Fluidleitung (B) mit der Elektrolyseeinheit (30) und dem Verbrennungskraftwerk (10) gekoppelt ist, wobei die fünfte Fluidleitung (B) dazu eingerichtet ist, den in der Elektrolyseeinheit (30) erzeugten Sauerstoff dem Verbrennungskraftwerk (10) für die Verbrennung des Brennstoffes (14) zuzuführen.

11. System (100) nach einem der voranstehenden Ansprüche, **dadurch gekennzeichnet, dass**
das Verbrennungskraftwerk (10) als eine Gasturbine oder ein Müllkraftwerk ausgebildet ist.

12. Verfahren zum Betreiben eines Systems (100) nach einem der voranstehenden Ansprüche, wobei das Verfahren die Schritte aufweist:
(a) Verbrennen eines Brennstoffes (14) in einem Verbrennungskraftwerk (10),
(b) Entstehen von warmen Abgasen beim Verbrennen des Brennstoffes (14),
(c) Abführen der warmen Abgase mittels einer Abgasleitung (A),
(d) Zuführen von thermischer Energie der warmen Abgase aus der Abgasleitung (A) zu einer Elektrolyseeinheit (30) und
(e) Erzeugen von Wasserstoff in der Elektrolyseeinheit (30) unter Nutzung der thermischen Energie aus den warmen Abgasen,
**dadurch gekennzeichnet, dass**
das Verfahren ferner die Schritte aufweist:
(f) Zuführen von Strom zu der Elektrolyseeinheit (30) und
(g) Ausgleichen einer Schwankung der Betriebstemperatur der Elektrolyseeinheit (30), die sich aus einer Fluktuation des der Elektrolyseeinheit (30) zugeführten Stromes ergibt, mittels Regelns einer Steuervorrichtung (41), die dazu eingerichtet ist, eine Wärmeübertragungsrate von der Abgasleitung (A) zu der Elektrolyseeinheit (30) zu steuern.

13. Verfahren nach Anspruch 12,
wobei das Regeln der Steuervorrichtung (41) derart erfolgt, dass eine konstante oder im Wesentlichen konstante Wasserstoffmenge produziert wird.

## Claims

1. System (100) comprising a combustion power plant (10) for generation of power and an electrolysis unit (30) for production of hydrogen,
wherein the combustion power plant (10) has a combustion chamber (11) for combustion of a fuel (14) and an offgas conduit (A) for leading off the hot offgases formed in the combustion of the fuel (14), and
wherein the offgas conduit (A) is thermally coupled to the electrolysis unit (30),
**characterized in that**
the system (100) has an open-loop control device (41) set up to control a rate of heat transfer from the offgas conduit (A) to the electrolysis unit (30).

2. System (100) according to Claim 1,
**characterized in that**
the offgas conduit (A) is thermally coupled to the electrolysis unit (30) by means of a heat pipe (40).

3. System (100) according to Claim 2,
**characterized in that**
the heat pipe (40) takes the form of a heat pipe.

4. System (100) according to any of the preceding claims, **characterized in that**
the electrolysis unit (30) is electrically coupled to a renewable power generation source (50).

5. System (100) according to any of the preceding claims, **characterized in that**
the system (100) has a closed-loop control device (42) set up to compensate for any fluctuation in the operating temperature of the electrolysis unit (30) that results from a fluctuation in a power supplied to the electrolysis unit (30) by means of control exerted by the open-loop control device (41).

6. System (100) according to Claim 5,
**characterized in that**
the closed-loop control device (42) is set up to control the open-loop control device (41) in such a way that a constant or essentially constant amount of hydrogen is produced by the electrolysis unit (30).

7. System (100) according to any of the preceding claims, **characterized in that**
the offgas conduit (A) is thermally coupled to a steam generator (20) set up to generate steam from the waste heat from the offgas, and the steam generator (20) is coupled to the electrolysis unit (30) by means of a first fluid conduit (D),
wherein the first fluid conduit (D) is set up to feed the steam generated from the waste heat in the steam generator (20) to the electrolysis unit (30).

8. System (100) according to Claim 7,
**characterized in that**
the first fluid conduit (D) is coupled by means of a heat exchanger (23) to a fourth fluid conduit (C), wherein the fourth fluid conduit (C) is coupled to the electrolysis unit (30) and is set up to remove the hydrogen produced in the electrolysis unit (30).

9. System (100) according to Claim 7 or 8,
**characterized in that**
the steam generator (20) is coupled to a steam turbine (16) of the combustion power plant (10) by means of a second fluid conduit (E) which is set up to expand the steam generated in the steam generator (20) from the waste heat from the offgas, wherein the steam turbine (16) is coupled to a first load (17), and
wherein the steam turbine (16) is coupled to the steam generator (20) by means of a third fluid conduit (H) for recycling the steam expanded in the steam turbine (16).

10. System (100) according to any of the preceding claims, **characterized in that**
a fifth fluid conduit (B) is coupled to the electrolysis unit (30) and the combustion power plant (10),
wherein the fifth fluid conduit (B) is set up to feed the oxygen produced in the electrolysis unit (30) to the combustion power plant (10) for the combustion of the fuel (14) .

11. System (100) according to any of the preceding claims, **characterized in that**
the combustion power plant (10) takes the form of a gas turbine or of a refuse power plant.

12. Method of operating a system (100) according to any of the preceding claims, wherein the method has the following steps:
(a) burning a fuel (14) in a combustion power plant (10),
(b) forming hot offgases in the combustion of the fuel (14),
(c) removing the hot offgases by means of an offgas conduit (A),
(d) feeding thermal energy of the hot offgases from the offgas conduit (A) to an electrolysis unit (30) and
(e) producing hydrogen in the electrolysis unit (30) using the thermal energy from the hot offgases,
**characterized in that**
the method additionally has the following steps:
(f) supplying power to the electrolysis unit (30) and
(g) compensating for any fluctuation in the operating temperature of the electrolysis unit (30) that results from any fluctuation in the power supplied to the electrolysis unit (30), by means of control exerted by an open-loop control device (41) set up to control a rate of heat transfer from the offgas conduit (A) to the electrolysis unit (30).

13. Method according to Claim 12,
wherein the open-loop control device (41) is controlled in such a way that a constant or essentially constant amount of hydrogen is produced.

## Revendications

1. Système (100) comprenant une centrale (10) à combustion pour la production de courant et une unité (30) d'électrolyse pour la production d'hydrogène,
dans lequel la centrale (10) à combustion a une chambre de combustion (11) pour la combustion d'un combustible (14) et un conduit (A) pour les gaz perdus pour l'évacuation des gaz perdus chauds créés à la combustion du combustible (14) et
dans lequel le conduit (A) pour les gaz perdus est couplé thermiquement à l'unité (30) d'électrolyse,
**caractérisé en ce que**
le système (100) a un dispositif (41) de commande, qui est agencé pour commander un taux de transmission de la chaleur du conduit (A) pour les gaz perdus à l'unité (30) d'électrolyse.

2. Système (100) suivant la revendication 1,
**caractérisé en ce que**
le conduit (A) pour les gaz perdus est couplé thermiquement à l'unité (30) d'électrolyse au moyen d'un caloduc (40).

3. Système (100) suivant la revendication 2,
**caractérisé en ce que**
le caloduc (40) est constitué sous la forme d'un heatpipe.

4. Système (100) suivant l'une des revendications précédentes,
**caractérisé en ce que**
l'unité (30) d'électrolyse est couplée électriquement à une source (50) de production de courant par récupération.

5. Système (100) suivant l'une des revendications précédentes,
**caractérisé en ce que**
le système (100) a un dispositif (42) de régulation, qui est agencé pour, au moyen d'une régulation du dispositif (41) de commande, compenser une fluctuation de la température de fonctionnement de l'unité (30) d'électrolyse, qui provient d'une fluctuation d'un courant apporté à l'unité (30) d'électrolyse.

6. Système (100) suivant la revendication 5,
**caractérisé en ce que**
le dispositif (42) de régulation est agencé pour réguler le dispositif (41) de commande, de manière à produire une quantité d'hydrogène constante ou sensiblement constante par l'unité (30) d'électrolyse.

7. Système (100) suivant l'une des revendications précédentes,
**caractérisé en ce que**
le conduit (A) pour les gaz perdus est couplé thermiquement à un générateur (20) de vapeur, qui est agencé pour produire de la vapeur d'eau à partir de la chaleur perdue du gaz perdu, et le générateur (20) de vapeur communique avec l'unité (30) d'électrolyse, au moyen d'un premier conduit (D) pour du fluide,
dans lequel le premier conduit (D) pour du fluide est agencé pour envoyer à l'unité (30) d'électrolyse de la vapeur d'eau produite à partir de la chaleur perdue dans le générateur (20) de vapeur.

8. Système (100) suivant la revendication 7,
**caractérisé en ce que**
le premier conduit (D) pour du fluide communique avec un quatrième conduit (C) pour du fluide, au moyen d'un échangeur de chaleur (23), dans lequel le quatrième conduit (C) pour du fluide communique avec l'unité (30) d'électrolyse et est agencé pour évacuer l'hydrogène produit dans l'unité (30) d'électrolyse.

9. Système (100) suivant la revendication 7 ou 8,
**caractérisé en ce que**
le générateur (20) de vapeur communique au moyen d'un deuxième conduit (E) pour du fluide avec une turbine (16) à vapeur de la centrale (10) à combustion, qui est agencée pour détendre la vapeur d'eau produite dans le générateur (20) de vapeur à partir de la chaleur perdue du gaz perdu,
dans lequel la turbine (16) à vapeur est couplée à une première charge (17) et
dans lequel la turbine (16) à vapeur communique au moyen d'un troisième conduit (H) pour du fluide avec le générateur (20) de vapeur pour le retour de la vapeur d'eau détendue dans la turbine (16) à vapeur.

10. Système (100) suivant l'une des revendications précédentes,
**caractérisé en ce qu'**
un cinquième conduit (B) pour du fluide communique avec l'unité (30) d'électrolyse et avec la centrale (10) à combustion, dans lequel le cinquième conduit (B) pour du fluide est agencé pour apporter l'oxygène produit dans l'unité (30) d'électrolyse à la centrale (10) à combustion pour la combustion du combustible (14) .

11. Système (100) suivant l'une des revendications précédentes,
**caractérisé en ce que**
la centrale (10) à combustion est constituée sous la forme d'une turbine à gaz ou d'une centrale incinératrice d'ordures.

12. Procédé pour faire fonctionner un système (100) suivant l'une des revendications précédentes, dans lequel le procédé a les stades :
(a) combustion d'un combustible (14) dans une centrale (10) à combustion,
(b) création de gaz perdus chauds à la combustion du combustible (14),
(c) évacuation des gaz perdus chauds au moyen d'un conduit (A) pour des gaz perdus,
(d) envoi d'énergie thermique des gaz perdus chauds d'un conduit (A) pour des gaz perdus à une unité (30) d'électrolyse et
(e) production d'hydrogène dans l'unité (30) d'électrolyse en utilisant l'énergie thermique des gaz perdus chauds,
**caractérisé en ce que**
le procédé a en outre les stades :
(f) envoi de courant à l'unité (30) d'électrolyse et,
(g) compensation d'une fluctuation de la température de fonctionnement de l'unité (30) d'électrolyse, qui provient d'une fluctuation du courant envoyé à l'unité (30) d'électrolyse, au moyen d'une régulation d'un dispositif (41) de commande, qui est agencé pour commander un taux de transmission de la chaleur du conduit (A) pour les gaz perdus à l'unité (30) d'électrolyse.

13. Procédé suivant la revendication 12,
dans lequel la régulation du dispositif (41) de commande s'effectue de manière à produire une quantité d'hydrogène constante ou sensiblement constante.
